# EUROPÄISCHE PATENTANMELDUNG

(11) **EP 1 923 585 A2**
(43) Veröffentlichungstag der Anmeldung: **21.05.2008**
(21) Anmeldenummer: 07120870.6
(22) Anmeldetag: 16.11.2007
(51) Int. Cl.: F16B 37/06

(54) **Stanzmutter**

(30) Priorität: 17.11.2006 DE 102006054376; 26.01.2007 DE 102007004117
(71) Anmelder: NEDSCHROEF PLETTENBERG GmbH, 58840 Plettenberg (DE)
(72) Erfinder: Ferreau, Oliver Nedschroef Plettenberg GmbH, 58762 Altena (DE); Can, Metin Nedschroef Plettenberg GmbH, 58300 Wetter (DE); Hirschfeld, Henning Nedschroef Plettenberg GmbH, 58840 Plettenberg (DE)
(74) Vertreter: Vogeser, Werner

(57) **Zusammenfassung**

Durch ballige Ausbildung der Polygonflächen (15) am Schaft (13) einer Stanzmutter wird deren Drehmomentbelastbarkeit erhöht.

## Beschreibung

### I. Anwendungsgebiet

Die Erfindung betrifft Stanzmuttern wie sie beispielsweise aus der DE 15 75 187 sowie der DE 36 26 466 bekannt sind.

### II. Technischer Hintergrund

Dabei wird die Stanzmutter in ein nicht-vorgelochtes Blech eingepresst und wirkt dabei als Stanzstempel, die einen Butzen aus dem Blech ausstanzt.

Um die notwendige drehfeste Fixierung der Stanzmutter im Blech zu erreichen, ist der im Blech steckende Schaftteil der Stanzmutter mit einem unrunden, meist polygonen Außenumfang ausgestattet.

Prinzipiell müssen dabei die so genannten Stanzmuttern, bei denen während des Einpressvorganges der Mutter in das Blech ausschließlich das Blech, aber nicht die Mutter selbst verformt wird, die ähnlich gestalteten so genannten Nietmuttern unterschieden werden, bei denen während des Einpressvorganges auch die Mutter, teilweise zusätzlich zum Blech, verformt wird, meistens im freien Ende des Schaftbereiches. Bei derartigen Stanzmuttern ist eine der wesentlichen Kenngrößen die Drehmoment-Belastbarkeit, die die eingepresste Mutter verkraften kann, bevor sie im Blech durchdreht.

Dies wird vorzugsweise durch eine Formschlussverbindung zwischen Mutter und Blech, einerseits durch die polygone Ausgestaltung des Schaftteiles, andererseits durch die Erhebungen in der Fläche der Schulter der Mutter, an welche sich durch Fließvorgänge des Bleches beim Einpressen das umgebende Blechmaterial möglichst gut anliegt.

In der Praxis hat sich jedoch herausgestellt - auch unter Berücksichtigung der Tatsache, dass heute in der verarbeitenden Industrie immer härtere und damit sprödere und damit weniger fließfähige Blechsorten eingesetzt werden - dass dieses Fließvermögen unterschätzt worden ist.

Dabei entstehen zwischen dem theoretischen Gesamtumfang in Form eines Hüllkreises und der Außenkontur des Schaftteiles Differenzflächen, die eine in axiale Richtung betrachtet flache, linsenförmige Gestalt mit Enden besitzen, die in einem spitzen Winkel auslaufen.

Diese Differenz-Flächen müssen beim Einpressen der Mutter von dem fließenden Blech-Material in radialer Richtung überwunden werden, damit sich das Blechmaterial wie gewünscht an der unrunden, etwa polygonen, Außenkontur des Schaftteiles anlegt und dadurch ein Verdrehen gegenüber dem unrunden Schaft verhindert wird.

Bei einer versuchten Verdrehung wirkt das ursächliche Drehmoment dabei jedoch unter einem sehr kleinen, spitzen Winkel, fast noch tangential, gegen die unrunde Außenkontur des Schaftteiles, so dass durch diese Keil-Wirkung ein Lockern der Formschlussverbindung mit der Zeit möglich sein kann.

### III. Darstellung der Erfindung

### a) Technische Aufgabe

Es ist daher die Aufgabe der Erfindung, eine Stanzmutter, insbesondere in Relation zu dem zu verarbeitenden Blech, so zu gestalten, dass das Lösemoment der eingepressten Mutter möglichst groß wird.

### b) Lösung der Aufgabe

Diese Aufgabe wird durch die Ansprüche 1; 31 und 32 gelöst. Vorteilhafte Ausführungsformen ergeben sich aus den Unteransprüchen.

Durch die ballige Ausbildung der Polygonflächen wird die Drehmoment-Belastbarkeit deutlich verbessert, was an der anderen Gestaltung des Außenumfanges des Schaftteiles liegt:

Die Polygonflächen können ballig ausgebildet sein betrachtet entweder in axialer Richtung oder in tangentialer Richtung wodurch der Winkel unter dem das Drehmoment angreift, größer wird und die Keilwirkung geringer.

Eine andere Methode, um den Keilwinkel des Drehmomentangriffs zu vergrößern oder groß zu halten und gleichzeitig die radiale Tiefe der Differenzfläche zu verringern, besteht darin, dass die ballige Ausformung nicht durch eine Kreisbogenform realisiert wird, sondern durch eine ungleichmäßige Kontur, deren Krümmungsradius nahe der Kante zwischen zwei Polygonflächen zunimmt oder durch einen Linienzug aus geraden Abschnitten, so dass die letzten, an der Kante aneinander stoßenden, Linien den gewünschten Zwischenwinkel aufweisen, der deutlich kleiner als 180°, vorzugsweise im Bereich von 80° bis 130°, liegen sollte.

Dadurch, dass der Stanzstempel, also die freie Stirnfläche des Schaftteiles einerseits, und die auf der Gegenseite des Bleches angelegte Matrize, in die die Stanzmutter beim Einpressen geringfügig eintaucht, einander entsprechende Umfangskonturen und nur einen begrenzten Durchmesserunterschied besitzen, wird der Butzen zuverlässig aus dem Blechteil ausgestanzt, und fällt durch die Matrize ab. Vorzugsweise besitzt die Matrize einen runden Innendurchmesser, der wesentlich einfacher und kostengünstiger herzustellen ist als ein unrunder Durchmesser, so dass ausreichend maßhaltige Rohre und Buchsen als Fertigmatrize oder zumindest als Halbzeug zur Herstellung der Matrize kostengünstig zugekauft werden können.

Vorzugsweise besitzt dementsprechend auch das Schaftteil an seiner freien Stirnfläche einen runden Außendurchmesser, trotz der ansonsten polygonen Außenkontur des restlichen Schaftteiles. Denkbar wären auch übereinstimmende unrunde Konturen von Stanzstempel, also Stirnfläche des Schaftteiles, und Matrize, jedoch erhöht dies nicht nur die Herstellkosten, sondern bedingt auch eine Drehlagenpositionierung der Stanzmutter vor dem Einpressen, nämlich ausgerichtet auf die Drehlage der unrunden Matrize.

Der Unterschied zwischen dem Durchmesser der Matrize und dem Durchmesser der Stirnfläche des Schaftteiles als Stanzstempel hängt von der Dicke des Blechteiles ab und liegt bei 8 bis 12/100 mm pro mm der Blechdicke. Dabei muss die als Stanzstempel wirkende freie Stirnfläche des Schaftteiles keineswegs den größten Außendurchmesser des Schaftteiles darstellen.

Vielmehr hat sich gezeigt, dass der größte Außendurchmesser des Schaftteiles von der freien Stirnfläche aus zurückversetzt vorhanden sein sollte, und dieser größte Außendurchmesser, der sog. Pressdurchmesser, der die vom Stanzdurchmesser erzeugte Innenkontur im Blechteil radial nach außen schiebt, bereits wie der Rest des Schaftteiles polygon ausgebildet sein sollte. Zwischen dem größeren Pressdurchmesser und dem stirnseitigen Stanzdurchmesser verläuft also eine Pressschräge, die zwischen 10° und 20°, insbesondere zwischen 13° und 17°, zur Axialrichtung steht.

Dieser Abschnitt bildet jedoch keinen Kegelstumpf, sondern in dieser Pressschräge laufen die Polygonflächen, die dem Schaft zwischen dem Pressdurchmesser und dem Ansatz zum Kopfteil seine polygonförmige Gestalt geben, aus, um die gewünschte runde Außenkontur am stirnseitigen Stanzdurchmesser des Schaftteiles zu ergeben.

Als richtige axiale Länge der Pressschräge hat sich eine Länge von 5% bis 25%, insbesondere von 8% bis 15%, der axialen Länge des Schaftteiles ergeben, sowie eine Winkelabweichung von 20 - 40°, insbesondere 30 - 40° von der Axialrichtung.

Dabei ist ferner zu beachten, dass die axiale Länge des Schaftteiles kürzer sein soll als die Dicke des Bleches, in welches die Stanzmutter eingesetzt werden soll, damit die eingesetzte Pressmutter auf der Gegenseite nicht über die Kontur des Blechteiles vorsteht und dort Probleme verursacht.

Dabei ist die Differenz zwischen Schaftlänge und Blechdicke nicht immer gleich, sondern hängt einerseits von der absoluten Dicke des Bleches und andererseits von der Materialpaarung Stanzmutter/Blechteil, insbesondere dem Material des Blechteiles, ab. Als vorteilhafte Werte haben sich ergeben:

### Blech: Stahl; Mutter: Stahl

Schaftlänge 0,05 - 0,3 mm, insbesondere 0,05 - 0,1 mm, kürzer als Blechdicke und/oder Schaftlänge 1% - 10% kürzer als Blechdicke, Unterschied in % umso kleiner, je größer Blechdicke.

### Blech: Leichtmetall; Mutter: Stahl

Schaftlänge 0,1 - 0,4 mm, insbesondere 0,1 - 0,2 mm, kürzer als Blechdicke und/oder Schaftlänge 2% - 15% kürzer als Blechdicke, Unterschied in % umso kleiner, je größer Blechdicke.

Die Blechdicke beträgt in der Regel 2-6 mm.

Während durch die Verkürzung des Schaftteiles gegenüber dem Blechteil zuverlässig das Überstehen der eingesetzten Mutter über die Rückseite des Blechteiles verhindert wird, wird eine hohe Prozesssicherheit hinsichtlich des Abscherens des Butzens und Herabfallens dadurch erzielt, dass beim Einpressen der Mutter die freie Stirnfläche des Schaftteiles, also die Pressfläche, die Oberseite der Matrize nicht nur erreicht, sondern geringfügig in diese eintaucht, wodurch das Abscheren des Butzens erst zuverlässig erreicht wird, zusammen mit einer ausreichend geringen Durchmesserdifferenz zwischen Außendurchmesser des Pressstempels und Innendurchmessers der Matrize.

Da der Schaftteil der Stanzmutter im montierten Zustand nicht über die Rückseite des Bleches vorstehen soll, ist dies nur erreichbar durch eine ringförmig umlaufende Aufwölbung in der Matrizenstirnfläche, deren axiale Erstreckung größer ist als der Rückstand der freien Stirnfläche des Schaftteiles gegenüber der Blechrückseite im montierten Zustand.

Die axiale Erstreckung des Matrizendurchmessers ist dabei vorzugsweise geringer als die axiale Erstreckung der Pressschräge, so dass der Matrizendurchmesser an der Matrizenstirnfläche größer als der Stanzdurchmesser des Schaftteiles und kleiner als sein Pressdurchmesser gewählt werden sollte.

Um die Drehmomentbelastbarkeit der eingesetzten Mutter nicht nur von dem Formschluss zwischen der Außenkontur des Schaftteiles und dem daran anliegenden Material des Blechteiles abhängen zu lassen, ist es bekannt, dass der schulterförmige Überstand des Mutternkopfes gegenüber dem Schaftteil nicht rechtwinklig zur axialen Richtung verläuft, sondern in Form einer schräg nach außen abfallenden Hinterschneidung, so dass bei einer unrunden Außenkontur des Kopfteiles sich die Ecken der schulterförmigen Unterseite des Kopfteiles zusätzlich in die Oberseite des Blechteiles einpressen und die Drehmomentbelastbarkeit weiter erhöhen.

Zum einen hat sich gezeigt, dass eine optimale Verhakung zwischen Schulter und Blechteil erzielt wird, wenn die nach außen unten abfallende Hinterschneidung nicht bis zum Außendurchmesser des Kopfes verläuft, sondern vorher in eine umgekehrte, nach außen oben wieder ansteigende Außenschräge übergeht. Die beste Wirkung wird erzielt, wenn die radiale Erstreckung der Außenschräge 10% bis 30%, insbesondere 15% bis 25%, der radialen Erstreckung der Schulter beträgt.

Weiterhin ist das Einpressen der Vorsprünge der Schulter in das Blechteil nur dann gegeben, wenn der Kopfteil der Stanzmutter eine polygone Außenkontur besitzt, also wenn der Kopfteil beispielsweise nach Art einer üblichen Achtkantmutter geformt ist. Für viele Anwendungsfälle sind jedoch Kopfteile mit runder Außenkontur gewünscht, da das Ansetzen eines Schraubenschlüssels oder ähnlichen Werkzeuges am Außenumfang ohnehin aufgrund der drehfesten Verbindung mit dem Blechteil nicht notwendig ist.

Um auch in diesem Fall die beschriebene Verhakungswirkung zwischen Schulter und Blechteil herbeizuführen, werden erfindungsgemäß zwei Alternativen vorgeschlagen:

Entweder verläuft - bei rundem Außendurchmesser des Kopfes - der Übergang zwischen der schräg abfallenden Hinterschneidung und der Außenschräge nicht in gleichbleibendem radialen Abstand, also ebenfalls entlang einer runden Kontur, auf der Schulter, sondern entlang einer polygonen Kontur, wodurch wiederum eine Verhakungswirkung erzielt wird.

Ein besseres Ergebnis wird jedoch erzielt, wenn die Schulter relativ zur Axialrichtung keine rotationssymmetrische Fläche darstellt, sondern eine in Umlaufrichtung gewellte oder vorzugsweise gezackte Fläche, die entweder bis zum Außendurchmesser durchgehen kann oder auch nur bis zum Übergang in die Außenschräge. Die Außenschräge selbst kann dann wiederum eine rotationssymmetrische, nicht gewellte oder gezackte, Fläche sein.

Die Verdrehsicherheit hängt somit natürlich auch von der radialen Erstreckung der Schulter ab, die umso größer sein sollte, je dünner und/oder härter das Blechteil ist.

Durch die Anordnung einer oder gar mehrerer Ringnuten im Schaftumfang werden weitere Hinterschneidungen zur Verfügung gestellt, in die Blechmaterial beim Einsetzen der Mutter einfließen kann, und die das vor allem axiale Herausziehen der Mutter erschweren, bei nicht umlaufender Ringnut auch das Ausdrehen erschweren.

Um eine optimal festsitzende Mutter im Blech zu erreichen, soll bewirkt werden, dass die Aufwölbung der Matrize ein Fließen des Blechmaterials in den Hinterschnitt an der Mutter hinein bewirkt. Hierfür darf sich diese Aufwölbung nicht bereits beim Stanzvorgang der Mutter vollständig im Blech einprägen.

Um dies zu vermeiden wird - sofern die Größe des Außenumfanges des Kopfes der Mutter nicht verändert werden kann - die Größe des Stanzdurchmessers der Matrize verändert, um zwei im Grunde widersprüchliche Forderungen gleichzeitig zu erfüllen:

Einerseits wird der Stanzdurchmesser der Matrize so gering gewählt, dass während des Stanzens der Stanzmutter im Blech, also bis die Schulter der Stanzmutter die Blechoberfläche erreicht, die Aufwölbung der Matrize noch nicht vollständig im Blech eingedrungen ist.

Auf der anderen Seite wird der Durchmesser der Matrize zumindest so groß gewählt, dass erst nach dem Einprägen der Schulter des Mutterkopfes im Blech die Aufwölbung der Matrize vollständig auf der Gegenseite ins Blech eindringt bis zur Anlage an der Planfläche der Matrize.

Alternativ oder auch ergänzend zu dieser Wahl der Matrizengröße kann auch ein Stempel mit einem die Stanzmutter umlaufenden Ringflansch gewählt werden, dessen axiale Erstreckung so gewählt ist, dass sich der Ringflansch mit seiner Stirnfläche auf dem Blech abstützt und auf diesem gegebenenfalls auch einprägt, wenn die Stanzmutter die richtige Einpresstiefe erreicht hat. Dadurch stützt sich der Stempel mit diesem Ringflansch gegenüber der vorzugsweise einen gleich großen Außendurchmesser besitzenden Matrize ab. Dies hat erhebliche Vorteile:

Einerseits kann das richtige Einsetzen der Mutter kontrolliert werden, indem sich dann eine Kontrollmarkierung am Blech im Radialbereich außerhalb der Mutter, nämlich zwischen Ringflansch des Stempels und Planfläche der Matrize, ausbildet.

Des weiteren wird durch den ebenfalls anpressenden Ringflansch die Verfüllung des Hinterschnittes der Schulter der Stanzmutter optimiert, der Eindrückweg des Achtkants ist definiert, die Reproduzierbarkeit des Einpressvorganges wird verbessert und damit die Ausdrückkräfte und die Ausdrehmomemte in einen definierten Bereich gehalten, ohne die Geometrie der Stanzmutter verändern zu müssen.

Vor allem aber ist es dadurch möglich, die Anpressfläche gegen das Blech von der Seite des Mutternkopfes her zu verändern und damit in Relation zur Fläche des Stanzdurchmesser und der Aufwölbung der Matrize, ohne die letztere ändern zu müssen.

Die Führung der Mutter wird dabei verbessert indem die Innenkontur des Ringflansches möglichst genau der Außenkontur des Mutternkopfes entspricht, also insbesondere einen Innensechskant besitzt und/oder die Mutter möglichst gut im Inneren von einem Konus oder besser einem zentralen Führungszapfen des Stempels geführt wird.

### c) Ausführungsbeispiele

Ausführungsformen gemäß der Erfindung sind im Folgenden beispielhaft näher beschrieben. Es zeigen:
- Fig. 1:: Stanzmutter und Matrize in unterschiedlichen Bewegungszuständen,
- Fig. 2:: eine Aufsicht auf die Stanzmutter von unten,
- Fig. 3:: eine Seitenansicht der Stanzmutter der Fig. 2,
- Fig. 4:: eine Detailvergrößerung aus Fig. 2, und
- Fig. 5:: eine geänderte Einstanzmuttern-Vorrichtung.

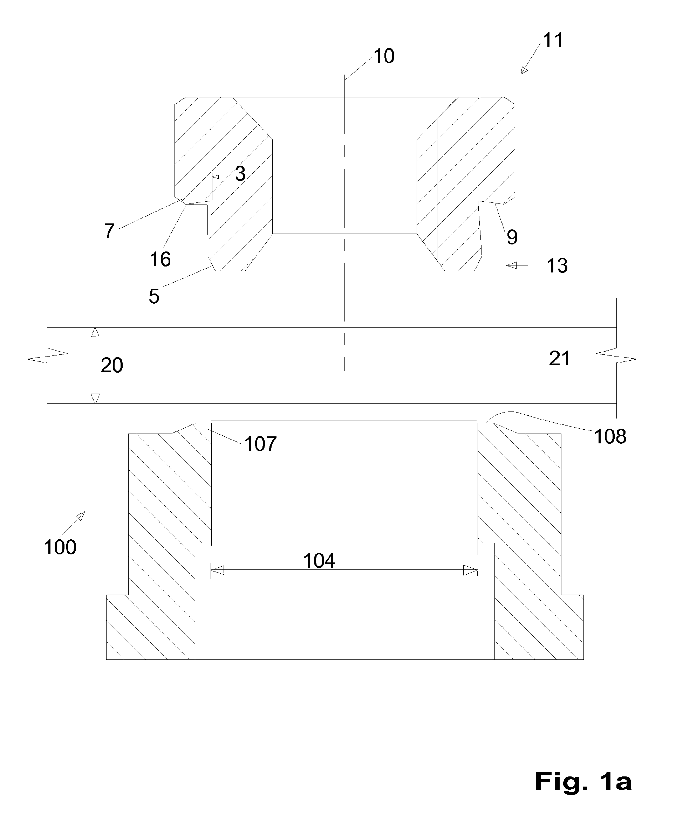

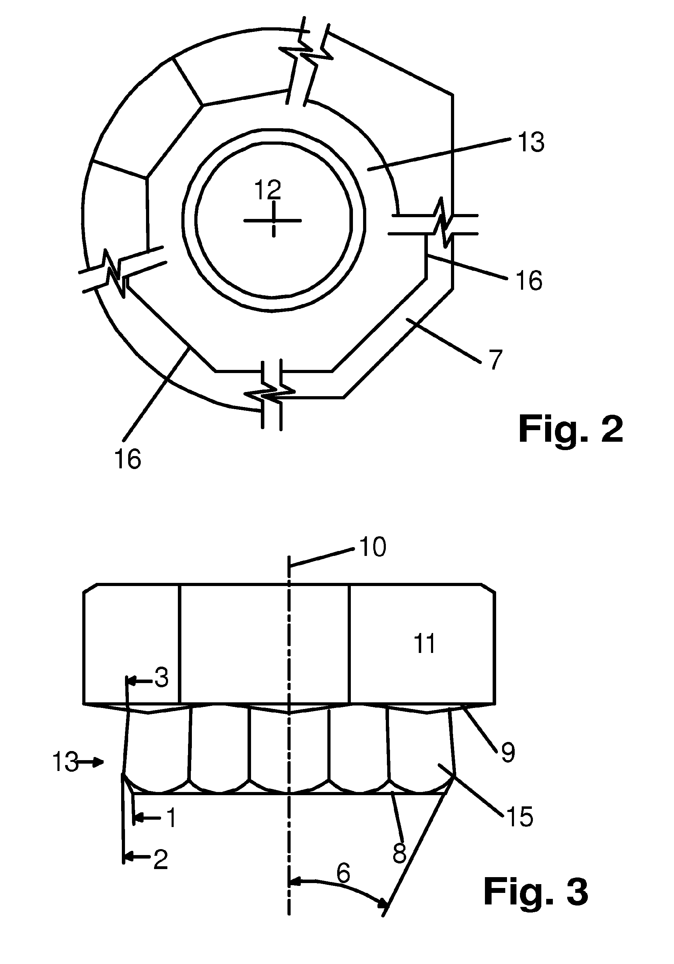

Die Fig. 1a und 3 lassen die Grundform der Stanzmutter am einfachsten erkennen, mit einem Schaftteil 13 und einem demgegenüber breiteren Kopfteil 11, die sich in Axialrichtung 10 aneinander anschließen, vorzugsweise einstückig miteinander ausgebildet sind und - bis auf die polygonen Außenkonturen - rotationssymmetrisch ausgebildet sind.

Kopf 11 als auch Schaft 13 sind von einer Gewindebohrung 12 durchdrungen, die vorzugsweise als Durchgangsbohrung ausgebildet ist, jedoch auch eine Sacklochbohrung sein könnte mit einer dann geschlossenen freien Stirnfläche 8 am Schaftteil 13.

Der Außenumfang des Schaftteiles 13 ist über den Hauptteil seiner Länge als Polygon gestaltet mit schräg nach außen zum freien Ende des Schaftteiles hin abfallenden oder auch parallel zur Axialrichtung 10 verlaufenden Polygonflächen 15.

Die Polygonflächen 15 gehen nicht bis zur freien Stirnfläche 8 des Schaftteiles 13 durch, da der größte Durchmesser des Schaftteiles 13 nicht der Stanzdurchmesser 1 am vorderen freien Ende, also der Stirnfläche 8, ist, sondern ein demgegenüber zurück versetzter, größerer Pressdurchmesser 2.

Die Polygonflächen 15 laufen im Bereich der Pressschräge 5 zwischen dem Stanzdurchmesser 1 und dem Pressdurchmesser 2 aus, wodurch der Pressdurchmesser 2 hinsichtlich des Umfanges eine polygone Kontur ergibt, der Stanzdurchmesser 1 dagegen eine runde Kontur.

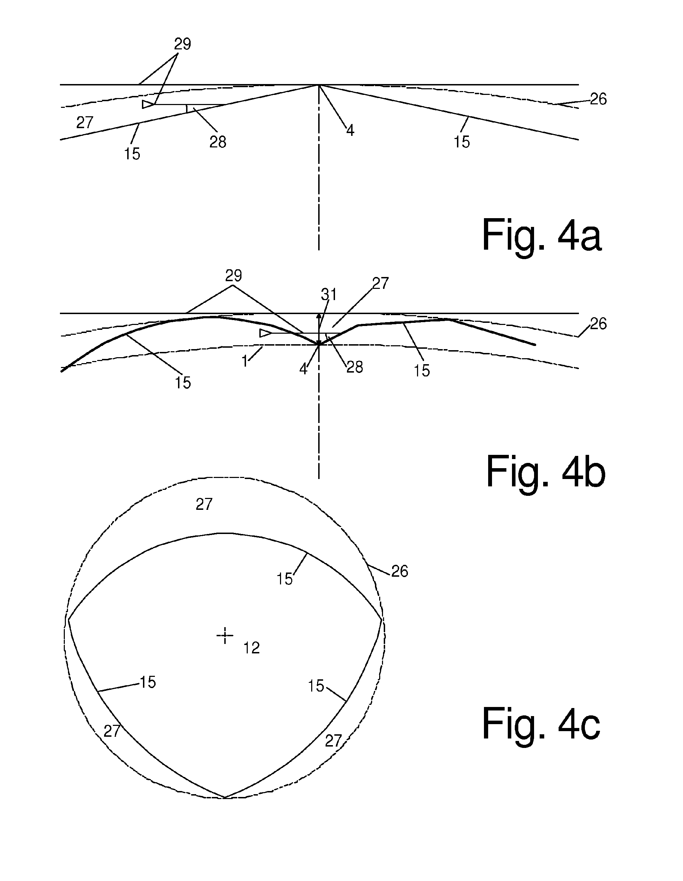

Fig. 4 a zeigt - vergrößert gegenüber Figur 3 - ebene Polygonflächen 15 gemäß des Standes der Technik, die sich an einer Kante 4 treffen.

Bei einer Drehmomentbelastung greift die Kraft 29 in Umfangsrichtung, also in Richtung der Tangentiale zum gestrichelt dargestellten Hüllkreis um den polygonen Schaft 13 an der Mutter an, und presst damit unter einem Keilwinkel 28 gegen vor allem die Randbereiche der Polygonflächen 15.

Fig. 4 a zeigt, dass abhängig von der Größe des Hüllkreises und der Anzahl der Polygonflächen dieser Keilwinkel 28 sehr kein ist, und damit eine starke Keilwirkung auftritt, die mit der Zeit ein Lösen dieser Formschlussverbindung bewirken kann.

Dagegen zeigt - in axialer Richtung betrachtet - Fig. 4 b linke Hälfte bei gleichem Radius des Hüllkreises und gleicher Anzahl an Polygonflächen 15 ballig ausgebildete Polygonflächen 15. Dabei wird unmittelbar ersichtlich, dass sich hierbei bei ansonsten gleichen Verhältnissen ein deutlich größerer Keilwinkel 28 ergibt.

Allerdings besitzen nunmehr die Differenzflächen 27 zwischen Hüllkreis und Polygonflächen eine wesentlich größere radiale Tiefe 31, die beim Einpressen der Mutter vom Blechmaterial durch Fließen des Materials überwunden werden muss.

Fig. 4c zeigt weiterhin die Situation, wenn der Radius der balligen Polygonflächen größer ist als der Radius des Hüllkreises 26. Dann entstehen sichelförmige Differenzflächen 27, bei denen die Kraftangriffsrichtung 29 ebenfalls unter einem sehr kleinen Zwischenwinkel 28 auf die Polygonflächen 15 einwirkt, wodurch die Drehmomentbelastbarkeit besser ist als bei ebenen Polygonflächen gemäß Fig. 4a aber geringer als bei der Lösung gemäß Fig. 4b.

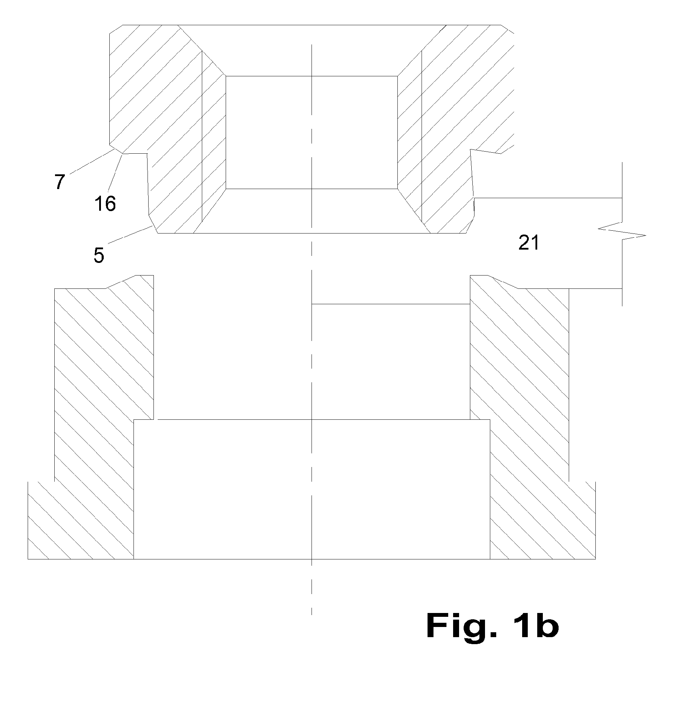

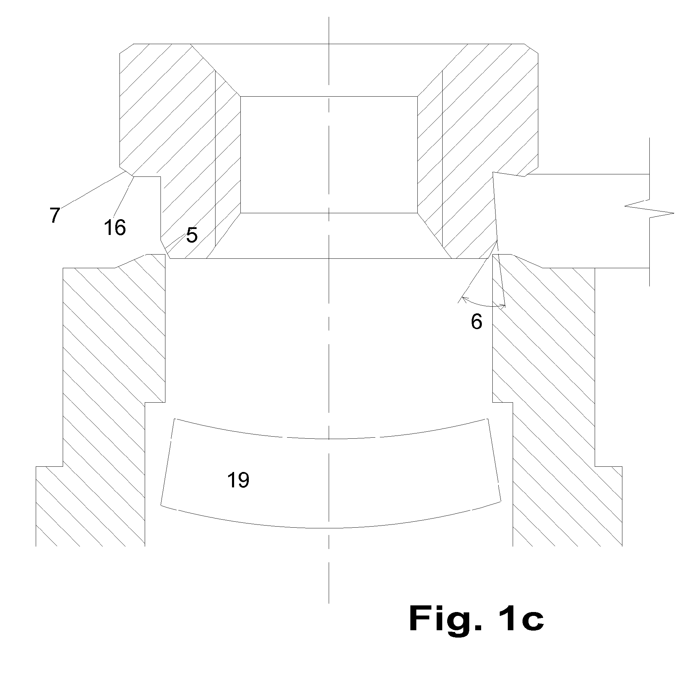

Wie Fig. 1 b zeigt, stanzt der kleinere Stanzdurchmesser 1 primär den Butzen 19 aus, indem er ihn - wie vor allem Fig. 1c zeigt - gegenüber dem Matrizendurchmesser 104 abschert. Der in Einpressrichtung weiter hinten liegende Pressdurchmesser 2 vergrößert die Einpressöffnung durch Verdrängen des umgebenden Blechmaterials, erreicht jedoch die Matrize 100 nicht mehr, da deren Stirnflächen, insbesondere die dort vorhandene Aufwölbung 107, auch am Ende der Einpressbewegung diesen Pressdurchmesser 2 in der Regel nicht mehr erreicht. Die Aufwölbung 107 zusammen mit den sich in der Oberseite des Bleches durch die Hinterschneidung 14 des Schaftteiles 13 gebildeten Erhebungen in der Schulter 9 des Kopfteiles 11 bewirken ein Fließen des Blechmaterials an dem hinterschnittenen Schaftteil 13 und die formschlüssige Anlage an dessen Polygonflächen 15.

Um mittels der Hinterschneidung 14 in der Schulter 9 des Kopfteiles 11 ebenfalls eine drehfeste Verhakung der Stanzmutter im Blechteil zu bewirken, selbst bei rundem Außenumfang des Kopfes, sind mehrere Ausformungen, auch in Kombination miteinander, möglich.

Wie die Aufsicht auf die Schulter 9 in der Fig. 2 und auch den Fig. 1 zeigt, wird bevorzugt die Hinterschneidung 14 nicht bis zum Außenumfang fortgesetzt, sondern geht vor Erreichen des äußeren Randes in eine Außenschräge 7 über.

Die dadurch vom äußeren Rand nach innen versetzte Erhebung 16 läuft bei einer nicht runden Außenkontur des Kopfes 11, wie in der rechten Hälfte der Fig. 2 dargestellt, ebenfalls unrund um und ergibt bereits eine drehfeste, formschlüssige Verbindung gegenüber dem Blech.

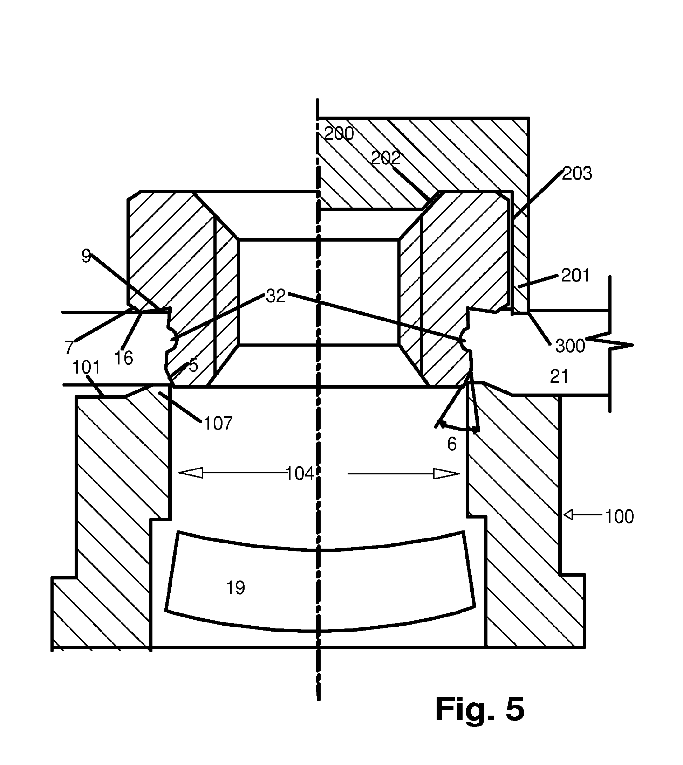

Figur 5 zeigt eine Bauform der gesamten Vorrichtung in einem Längsschnitt analog zu Figur 1 c mit weiteren Verbesserungen:

Zum einen ist im Schaftteil 13 der Stanzmutter im Außenumfang eine Ringnut 32 angeordnet, die hier einen bogenförmigen, d. h. halbkreisförmigen, Querschnitt besitzt und zumindest die am weitesten nach außen ragenden Bereiche, die Kanten 4 des Schaftteiles 13 durchschneidet, und vorzugsweise umlaufend im gesamten Schaftteil 13 vorhanden ist.

Dadurch wird die Ausziehbarkeit erschwert, da auch in diesem - in axialer Richtung als Hinterschnitt wirkender Nut - Material einfließen kann.

Des Weiteren ist in der rechten Bildhälfte der die Stanzmutter in Richtung Matrize 100 pressende Stempel 200 dargestellt, der in diesem Fall einen außen um die Stanzmutter umlaufenden Ringflansch 201 aufweist.

Dieser Ringflansch 201 dient der verbesserten Führung der Stanzmutter, vor allem aber ist die axiale Länge des Ringflansches 201 in Relation zur axialen Länge Stanzmutter und insbesondere deren Kopfteil 11 so gewählt, dass bei korrekter Einpresstiefe der Mutter in das Blech 21 der Ringflansch 201 sich bereits ebenfalls in der Oberseite des Bleches 21 einprägt und dort eine Markierungsprägung 300 hinterlässt.

Im Zentrum des Stempels 200 kann ein Konus 202 gegen die Stanzmutter vorstehen zur Anlage an der Anschrägung des Innengewindes der Stanzmutter, was ebenfalls die Führung und Zentrierung der Mutter erleichtert.

Der Innenumfang des Ringflansches 201 ist dabei entsprechend der Außenkontur des Kopfteiles der Stanzmutter geformt, beispielsweise mit einem Innensechskant 203 bei einem Sechskantkopf der Stanzmutter.

Wie an der Stellung der Matrize 100 auf den beiden Seiten der Figur 5 zu erkennen, sind in den beiden Bildhälften unterschiedliche Zustände des Einspressvorganges dargestellt:

In der rechten Hälfte ist der Einpressvorgang beendet, was sich darin äußerst, dass die Matrizen-Planfläche 101 an der Unterseite des Bleches 21 anliegt, und der Ringflansch 201 sich in der Oberseite des Bleches 21 bereits eingeprägt hat.

Die linke Bildhälfte zeigt den Zustand kurz vorher, was darin ersichtlich ist, dass die Aufwölbung 107 der Matrize sich noch nicht vollständig im Blech 21 eingeprägt hat und damit der Fließvorgang des Bleches 21 noch nicht abgeschlossen ist.

### BEZUGSZEICHENLISTE

- 1: Stanzdurchmesser
- 2: Pressdurchmesser
- 3: Halsdurchmesser
- 4: Kanten
- 5: Pressschräge
- 6: Presswinkel
- 7: Außenschräge
- 8: Stirnfläche
- 9: Schulter
- 10: Axialrichtung
- 11: Kopf
- 12: Gewindebohrung
- 13: Schaftteil
- 14: Hinterschneidung
- 15: Polygonfläche
- 16: Erhebung
- 17: konvexer Radius
- 18: konvexer Radius
- 19: Butzen
- 20: Blechdicke
- 21: Blech
- 22: Konvexe Höhe
- 23: Zwischenwinkel
- 24a,b: Flanke
- 25: Flankenwinkel
- 30: Tangentialrichtung
- 100: Matrize
- 104: Matrizen-Durchmesser
- 107: Aufwölbung
- 108: Aufwölbungs-Stirnfläche

## Patentansprüche

1. Stanzmutter mit
- einem Kopf (11);
- einem demgegenüber um eine Schulter (9) zurückversetzten, schmaleren Schaftteil (13) mit polygonem, aus Polygonflächen (15) gebildeten Außendurchmesser,
**dadurch gekennzeichnet, dass**
die Polygonflächen (15) betrachtet in Axialrichtung (10) betrachtet konvex ballig ausgebildet sind.

2. Stanzmutter nach Anspruch 1,
**dadurch gekennzeichnet, dass**
- der konvexe Radius (17) kleiner ist als der halbe Pressdurchmesser (2), insbesondere kleiner als der halbe Stanzdurchmesser (1), insbesondere kleiner als der halbe Halsdurchmesser (3) und insbesondere nur maximal 50%, besser 30%, des halben Pressdurchmesser (2) beträgt, und/oder
- der äußere freie Zwischenwinkel (23) an den Kanten (4) zwischen zwei gegeneinander angrenzende ballige Polygonflächen mindestens 100°, insbesondere mindestens 120° beträgt.

3. Stanzmutter nach einem der vorhergehenden Ansprüche,
**dadurch gekennzeichnet, dass**
- die Polygonflächen (15) im Bereich der Pressschräge (5) zwischen dem Stanzdurchmesser (1) und dem demgegenüber zurückversetztem Pressdurchmesser (2) ballig ausgebildet sind, und/oder
- die Polygonflächen (15) im Axialbereich der Polygonflächen (15) zwischen dem Pressdurchmesser (2) und der Schulter (9) ballig ausgebildet sind, und/oder
- die Kanten (4) zwischen den Polygonflächen (15) einen Rundungsradius von weniger als 0,2 mm, insbesondere weniger als 0,1 mm aufweisen.

4. Stanzmutter nach einem der vorhergehenden Ansprüche,
**dadurch gekennzeichnet, dass**
- die ballige Form der Polygonflächen (15) nicht kreisbogenförmig, insbesondere durch in Winkel zueinander stehende gerade Abschnitte oder eine unregelmäßige Form, gebildet wird, und/oder
- die ballige Tiefe (22) bei balliger Ausbildung betrachtet in Axialrichtung (10) von der Schulter (9) zur Stirnfläche (8) zunimmt.

5. Stanzmutter nach einem der vorhergehenden Ansprüche,
**dadurch gekennzeichnet, dass**
- die ballige Tiefe (22) bei balliger Ausbildung betrachtet in axialer Richtung (10) im Bereich des Pressdurchmessers (2) am geringsten ist und zur Schulter (9) hin, und/oder insbesondere zur Stirnfläche (8) zunimmt, und/oder
- die Anzahl der Polygonflächen (15) in Umfangsrichtung zwischen 6 und 20, insbesondere zwischen 8 und 15 beträgt, und/oder
- die Anzahl der Polygonflächen (15) das 0,7-fache bis 1,7-fache des Pressdurchmessers (2) gemessen in Millimeter beträgt.

6. Stanzmutter nach einem der vorhergehenden Ansprüche,
**dadurch gekennzeichnet, dass**
- die als Stanzstempel wirkende Stirnfläche (8) des Schaftteiles (13) einen runden Stanzdurchmesser (1) aufweist, und/oder
- die axiale Länge der zwischen Pressdurchmesser (2) und Stanzdurchmesser (1) ausgebildeten Pressschräge (5) in Abhängigkeit vom Presswinkel (6) so groß gewählt ist, dass die insbesondere ebenen Polygonflächen (15) des Schaftteiles (13) zwischen Pressdurchmesser (2) und Schulter (9) des Kopfes (11) im Bereich der Pressschräge (5) auslaufen.

7. Stanzmutter nach einem der vorhergehenden Ansprüche,
**dadurch gekennzeichnet, dass**
- der Presswinkel (6) zwischen 10° und 20°, insbesondere zwischen 13° und 17°, insbesondere 15°, beträgt, und/oder
- die axiale Länge der Pressschräge (5) zwischen 5% und 25%, insbesondere zwischen 8% und 15% der axialen Länge des Schaftteiles (13) beträgt, und/oder
- die vom Schaftteil (13) nach außen schräg abfallende Hinterschneidung (14) vor dem Außendurchmesser des Kopfes (11) endet und in eine Außenschräge (7) übergeht, die nach außen ansteigt, und insbesondere die radiale Erstreckung der Außenschräge (7) zwischen 10% und 30%, insbesondere zwischen 15% und 25%, der radialen Erstreckung der Schulter (9) beträgt.

8. Stanzmutter nach einem der vorhergehenden Ansprüche,
**dadurch gekennzeichnet, dass**
- der Schrägstellungswinkel der Außenschräge (7) gegenüber der Querebene zur axialen Richtung (10) zwischen 10° und 30°, insbesondere zwischen 15° und 25° beträgt, und/oder
- die Schulter (9) relativ zur Axialrichtung (10) auch bei rundem Außendurchmesser des Kopfes (11) keine rotationssymmetrische Fläche ist, sondern eine in Umlaufrichtung gewellte oder gezackte Fläche, insbesondere bei rundem Außendurchmesser des Kopfes (11), und/oder
- die wellige oder zickzackförmige Schulterfläche (9) zwischen 4 und 16, insbesondere zwischen 6 und 8 Erhebungen bzw. Täler über den Umfang aufweist.

9. Stanzmutter nach einem der vorhergehenden Ansprüche,
**dadurch gekennzeichnet, dass**
- der Halsdurchmesser (3) maximal um 10%, besser nur um 7% geringer ist als der Pressdurchmesser (2), und/oder
- die Matrize einen runden Matrizen-Durchmesser (104) als wirksamen Innendurchmesser aufweist, und/oder
- der Matrizen-Durchmesser (104) um 0,08 bis 0,12 mm pro mm der Blechdicke (20) größer ist als der Stanzdurchmesser (1) der Stanzmutter.

10. Stanzmutter nach einem der vorhergehenden Ansprüche,
**dadurch gekennzeichnet, dass**
- die axiale Länge des Schaftteiles (13) um 1/10 bis 5/10 mm kürzer ist als die Blechdicke (20), insbesondere um 2/10 bis 3/10 kürzer, jeweils abhängig vom Material des Bleches, und/oder
- die Schulter (9) umso größer ist, je dünner und/oder weicher das Blech ist, insbesondere dass die größte Schulter-Breite der Mutter mindestens (4 mm minus Blechdicke), besser (5 mm minus Blechdicke) beträgt, und/oder
- die axiale Länge des Matrizen-Durchmessers (104) größer, insbesondere um den Faktor 1,2 bis 1,8 größer, ist als die Blechdicke (20).

11. Stanzmutter nach einem der vorhergehenden Ansprüche,
**dadurch gekennzeichnet, dass**
- der Matrizen-Durchmesser (104) größer als der Stanzdurchmesser (1) und kleiner als der Pressdurchmesser (2) ist, und/oder
- die axiale Länge des Schaftteiles (13) um weniger als die axiale Erstreckung der Aufwölbung (107) der Matrize (100) kürzer ist als die Blechdicke (20), und/oder
- im Außenumfang des Schaftteiles (13) eine Ringnut (32) angeordnet ist, die wenigstens die radial am weitesten nach außen ragenden Kanten (4) zwischen den Flächen (15) durchschneidet, insbesondere über den Umfang umlaufend durchgeht.

12. Stanzmutter nach einem der vorhergehenden Ansprüche,
**dadurch gekennzeichnet, dass**
- die Stanzmutter eine zentrale Durchgangsöffnung ohne Innengewinde besitzt zum Zusammenwirken mit einer selbstschneidenden Schraube, und/oder
- die Ringnut (32) einen bogenförmigen Querschnitt besitzt.

13. Stanzmuttern-Vorrichtung mit
- einer Stanzmutter nach einem der vorhergehenden Ansprüche,
- einer dazu passenden Matrize (100); und einem
- Blech (21), in welche die Stanzmutter eingepresst werden soll;
**dadurch gekennzeichnet, dass**
der ballige Radius (17) der Polygonflächen (15) betrachtet in axialer Blickrichtung umso kleiner gewählt wird, je größer die Härte des Bleches (21) ist.

14. Stanzmuttern-Vorrichtung mit
- einer Stanzmutter nach einem der vorhergehenden Ansprüche,
- einer dazu passenden Matrize (100); und einem
- Blech (21), in welche die Stanzmutter eingepresst werden soll;
**dadurch gekennzeichnet, dass**
der ballige Radius (18) der Polygonflächen (15) betrachtet in einer Tangentialrichtung (30) zur Axialrichtung (10) umso kleiner gewählt wird, je größer die Härte des Bleches (21) ist.

15. Stanzmuttern-Vorrichtung nach einem der vorhergehenden Ansprüche,
**dadurch gekennzeichnet, dass**
- die Kanten (4) zwischen den Polygonflächen (15) umso weniger gerundet sind, je härter das Blech (21), und/oder
- die ballige Tiefe (22) im Bereich des Pressdurchmessers (2) umso größer ist, je härter das Blech (21) ist, und/oder
- der Matrizendurchmesser (104) ausreichend klein gewählt wird, so dass beim Eindringen der Stanzmutter bis zur Schulter (9) in das Blech (20) die Aufwölbung (107) der Matrize (7) noch nicht vollständig in das Blech (20) eindringt.

16. Stanzmuttern-Vorrichtung nach einem der vorhergehenden Ansprüche,
**dadurch gekennzeichnet, dass**
- der Durchmesser (104) der Matrize (100) wenigstens so groß gewählt wird, dass sich während des vollständigen Eindringens die Aufwölbung (107) in das Blech (20) bis zur Matrizen-Planfläche (101) die Schulter (9) der Stanzmutter in der Oberseite des Bleches (20) einprägt, und/oder
- der Stempel (200) zum Eindrücken der Stanzmutter einen außen um die Stanzmutter umlaufenden Ringflansch (201) aufweist, dessen axiale Erstreckung so bemessen ist, dass bei korrekter Einpresstiefe der Mutter am Blech (20) zwischen Stempel (200) und Matrizenplanfläche (101) eine Markierungs-Prägung (300) auftritt.

17. Stanzmutter-Vorrichtung nach einem der vorhergehenden Ansprüche,
**dadurch gekennzeichnet, dass**
- der Außendurchmesser der Matrize (100) größer ist als der Innendurchmesser des Ringflansches (201) und insbesondere genauso groß wie der Außendurchmesser (204) des Ringflansch (201), und/oder
- der Ringflansch (201) eine Innenkontur entsprechend der Außenkontur der Stanzmutter, insbesondere einen Innensechskant (203) besitzt, und/oder
- der Stempel (200) im Zentrum einen Konus (202) zur Anlage an der Anschrägung des Innengewindes der Stanzmutter besitzt.

18. Stanzmutter-Vorrichtung nach einem der vorhergehenden Ansprüche,
**dadurch gekennzeichnet, dass**
- der Stempel (200) im Zentrum einen zylindrischen Führungszapfen (205) aufweist, der in das Innengewinde der Stanzmutter hineinragt, vorzugsweise über deren gesamte axiale Erstreckung, und/oder
- die Stanzmutter mittels einer um die axiale Richtung der Stanz-Mutter taumelnde Bewegung ins Blech hineinbewegt wird.
